# EUROPEAN PATENT SPECIFICATION

(11) **EP 1 529 699 B1**
(45) Date of publication and mention of the grant of the patent: **13.12.2006**
(21) Application number: 04023910.5
(22) Date of filing: 07.10.2004
(51) Int. Cl.: B60R 22/46, F16H 1/32

(54) **Seat belt retractor**
Sicherheitsgurtaufroller
Enrouleur de ceinture de sécurité

(30) Priority: 07.11.2003 JP 2003378597
(43) Date of publication of application: 11.05.2005
(73) Proprietor: TAKATA CORPORATION, Minato-ku, Tokyo 106-8510 (JP)
(72) Inventor: Tanaka, Koji, Minato-ku Tokyo 106-8510 (JP); Inuzuka, Koji, Minato-ku Tokyo 106-8510 (JP)
(74) Representative: Vossius & Partner

(56) References cited:
- DE-A1- 4 335 284
- FR-A1- 2 783 476
- US-A1- 2001 045 483
- US-A1- 2003 192 977
- US-B1- 6 340 127
- PATENT ABSTRACTS OF JAPAN vol. 2003, no. 02, 5 February 2003 (2003-02-05) -& JP 2002 295607 A (BANDAI CO LTD), 9 October 2002 (2002-10-09)

## Description

The present invention pertains to a seat belt retractor which is installed in a vehicle such as an automobile or an operational vehicle and which winds up a seat belt for restraining and protecting an occupant and, more particularly, to a seat belt retractor which winds up a seat belt onto a spool with driving torque of a motor.

A seat belt device installed at a vehicle seat is indispensable as a device for preventing sudden movement of an occupant which may be caused due to acceleration produced in the event of a vehicle collision, thereby ensuring the occupant's safety. The seat belt device generally comprises a seat belt (webbing), a retractor, a buckle unit, and the like.

The retractor winds up the seat belt onto a take-up member (bobbin, spool) so as to retract the seat belt by spring force and locks the rotation of the take-up member in a belt-withdrawing direction because of the actuation of an emergency locking mechanism (ELR mechanism) in the event of a vehicle collision at which an impact acts on the vehicle, thereby restraining sudden forward movement of the occupant's body with the locked seat belt.

Conventionally, a retractor (so-called motorized retractor) has been already proposed as such a seat belt retractor, in which rotation of a motor is transmitted to a take-up member by a power transmission mechanism comprising a gear mechanism composed of a plurality of spur gears while the rotational speed is reduced by the power transmission mechanism, thereby winding up the seat belt onto the take-up member (for example, JP-A-2001-114070 (Patent Document 1)).

In this conventional retractor, a small-diameter gear (spur gear) fixed to the output shaft of the motor is in mesh with a large-diameter spur gear portion of an intermediate gear which comprises the large-diameter spur gear portion and a small-diameter spur gear portion. The small-diameter spur gear portion of the intermediate gear is in mesh with a large-diameter gear (spur gear) connected to the take-up shaft of the take-up member. Thus, the rotation of the motor is transmitted to the take-up member while the rotational speed is reduced.

The aforementioned conventional retractor is of a type that the reduction of the rotational speed is achieved by a plurality of stages of combinations of small-diameter and large-diameter spur gears which are in mesh with each other in the gear mechanism provided in the power transmission mechanism. Since there is a limitation of the reduction ratio obtained by using a pair (one stage) of large-diameter and small-diameter spur gears, however, it is necessary to provide a large number of stages of combinations of large-diameter and small-diameter spur gears to obtain a large reduction ratio in order to obtain a large torque sufficient for winding up the seat belt.

US-2001/045483 A1 discloses a motorized seat belt retractor according to the preamble of claim 1.

It is an object of the present invention to provide a seat belt retractor which can obtain large reduction ratio in order to obtain such a large torque as to wind up the seat belt, without increase of the size of the retractor. This object is achieved with the features of the claims.

In the invention, the power transmission mechanism for transmitting the driving torque of the motor to the take-up member is provided with a sun gear which is arranged at the input side of the rotation of the motor, a cylindrical convex portion which is integrally formed at one side in the axial direction of the sun gear, a ring member which is arranged at the one side in the axial direction of the sun gear and is provided on its inner periphery with internal teeth, a planetary gear which is provided on its outer periphery with external teeth to be in mesh with the internal teeth of the ring member and on its inner periphery with a concave portion to be fitted to the cylindrical convex portion, and a carrier which is arranged on the one side in the axial direction of the planetary gear and supports the planetary gear allowing the movement of the planetary gear radially. In this case, the driving torque generated by the motor is transmitted to the sun gear so as to rotate the sun gear. As the axial line of the cylindrical convex portion is eccentric from the axial line of the sun gear, the cylindrical convex portion revolves around the axial line of the sun gear according to the rotation of the sun gear. Since the concave portion of the planetary gear is fitted to and slides on the cylindrical convex portion, the planetary gear can eccentrically rotate while the external teeth of the planetary gear are in mesh with the internal teeth of the ring member. Since the planetary gear eccentrically rotating is supported by the carrier so as to allow the movement in the radial direction, the rotation of the sun gear can be outputted finally as the rotation of the carrier around the axial line.

In the aforementioned series of rotation-transfer systems, the ring member (internal gear) having the internal teeth and the planetary gear (spur gear) having the external teeth cooperate together to compose a so-called hypocycloid mechanism and the speed ratio (reduction ratio) is represented by (Z1-Z2)/Z2 wherein the number of teeth of the internal teeth of the ring member is Z1 and the number of teeth of the external teeth of the planetary gear is Z2. Therefore, by setting the difference between the numbers of teeth Z2 and Z1 to be relatively small, the reduction ratio of the rotation to be finally transmitted to the carrier via the cylindrical convex portion and the planetary gear from the sun gear member can be set to be large when the ring member is locked by the clutch pawl.

In this manner and according to the invention, a large reduction ratio to obtain a torque sufficient for winding up the seat belt can be easily obtained by utilizing the characteristics of the hypocycloid mechanism. Further, the necessity to construct multiple stages of combinations of spur gears can be avoided, thus preventing the increase in size of the retractor.

According to the invention, the cylindrical convex portion revolves around the axial line of the sun gear according to the rotation of the sun gear and the concave portion of the planetary gear is fitted to and slides on the cylindrical convex portion, whereby the planetary gear can eccentrically rotate while the external teeth of the planetary gear are in mesh with the internal teeth of the ring member. As a result, the rotation of the sun gear can be outputted finally as the rotation of the carrier around the axial line.

According to the preferred embodiment of claim 3, the axial lines of the sun gear, the ring member, and the carrier are substantially concentric to each other and the concave portion of the planetary gear to be fitted to the cylindrical convex portion of the sun gear is substantially concentric to the axial line of the planetary gear itself. With such a structure, the driving torque inputted to the sun gear is finally outputted as the rotation of the carrier, having an axial line substantially concentric to that of the sun gear, after reducing the rotational speed via the cylindrical convex portion and the planetary gear, axial lines of which are eccentric from that of the sun gear.

The arrangement according to claim 4 achieves such a structure that the concave portion is fitted to and slides on the cylindrical convex portion and the planetary gear can rotate eccentrically while the external teeth of the planetary gear are in mesh with the internal teeth of the ring member.

According to the present invention, a large reduction ratio to obtain a torque enough for winding up the seat belt can be easily obtained by utilizing the characteristics of the hypocycloid mechanism. Further, the necessity to construct multiple stages of combinations of spur gears can be avoided, thus preventing the increase in size of the retractor.

Hereinafter, an embodiment of the present invention will be described with reference to the attached drawings.
Fig. 1 is an exploded perspective view showing the general structure of a seat belt retractor of an embodiment of the present invention.
Fig. 2 is an enlarged exploded perspective view of a speed reduction mechanism as seen in a direction of arrow A in Fig. 1.
Figs. 3(a) and 3(b) are a perspective view of a sun gear member as seen in a direction of arrow B in Fig. 1 and a perspective view of the sun gear member as seen in a direction of arrow C in Fig. 1.
Fig. 4 is a view on arrow D in Fig. 1 illustrating the structure of a power transmission mechanism in a state that a retainer cover is removed.
Fig. 5 is an explanatory view showing the behavior during the drive in the belt winding direction.
Fig. 6 is an explanatory view showing the behavior during the drive in the belt winding direction.
Fig. 7 is an explanatory view showing the behavior during the drive in the belt withdrawing direction.
Fig. 8 is an explanatory view showing the behavior during the drive in the belt withdrawing direction.

In the following description, " left" and "right" mean "the left" and "the right" in the drawings used for explanation, and "clockwise" and "counterclockwise" mean "the clockwise" and "the counterclockwise" in the drawings used for explanation unless stated otherwise.

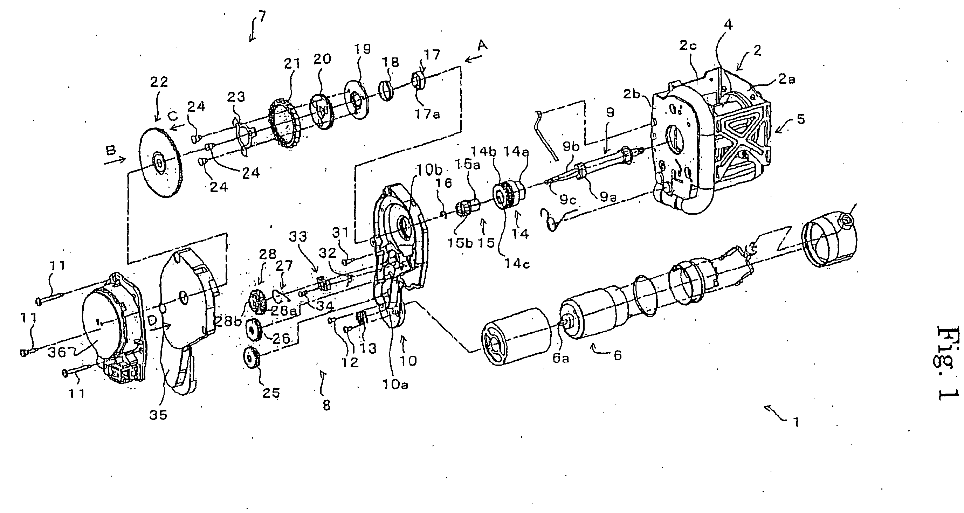

Fig. 1 is an exploded perspective view showing the general structure of a seat belt retractor of an embodiment.

In Fig. 1, the seat belt retractor 1 of this embodiment generally comprises a frame 2, a spool (take-up member) 4 for winding up a seat belt (not shown) for restraining an occupant if necessary, a locking means 5 as an ELR mechanism which is disposed on one side of the frame 2 and is actuated by large deceleration larger than a predetermined deceleration value generated at a collision or the like to prevent the rotation of the spool 4 in the belt withdrawing direction, a motor 6 for generating driving torque to be applied to the spool 4, and a power transmission gear mechanism (power transmission mechanism) 8 provided with a speed reduction mechanism 7 for reducing the rotational speed of the motor 6 in a power transmission path before being transmitted to the spool 4, the power transmission gear mechanism 8 transmitting the driving torque of the motor 6 to the spool 4 via the speed reduction mechanism 7.

The frame 2 comprises a pair of parallel side walls 2a, 2b, and a back plate 2c connecting these side walls 2a and 2b. Between the side walls 2a and 2b in the frame 2, the spool 4 for winding up the seat belt is rotatably disposed. The spool 4 may be a spool which is conventionally well known to be used in seat belt retractors.

Mounted on one side wall 2a is the locking means 5. The locking means 5 may also be a locking means which is conventionally well known to be used in seat belt retractors. That is, the locking means 5 is designed to be actuated to prevent the rotation of the spool 4 in the belt withdrawing direction when a vehicle sensor (deceleration sensor) senses a large deceleration larger than a predetermined deceleration value acting on a vehicle or when a webbing sensor (belt withdrawing speed sensor) senses a speed higher than a predetermined speed of withdrawing the seat belt.

Arranged between the spool 4 and the locking means 5 is a torsion bar 9 of a force limiter mechanism (energy absorbing mechanism: hereinafter sometimes referred to as "EA mechanism") for limiting the load on the seat belt when the withdrawing of the seat belt is prevented by the actuation of the locking mechanism 5. The EA mechanism by the torsion bar 9 may be a conventionally well known EA mechanism. That is, when the withdrawing of the seat belt is prevented by the actuation of the locking means 5, the torsion bar 9 is twisted and deformed according to the rotation of the spool 4 in the belt withdrawing direction by the inertia of the occupant, thereby limiting the load on the seat belt and absorbing impact energy.

On the other side wall 2b of the frame 2, a retainer 10 is mounted by three screws 11 as will be mentioned later. On the retainer 10 at its mounting side to the frame 2, the motor 6 is mounted by a pair of screws 12. The motor 6 has a rotary shaft 6a which extends through a through hole 10a of the retainer 10. A motor gear 13 having external teeth is fitted onto the rotary shaft 6a which projects on the side opposite to the frame 2 side of the retainer 10 so that the motor gear 13 rotates together with the rotary shaft 6a.

Disposed between the spool 4 and a torque transmitting portion 9a of the torsion bar 9 is a pinion member 14 which couples the spool 4 with the torque transmitting portion 9a in the rotational direction. The pinion member 14 has a connecting portion 14a having a polygonal cylindrical shape (hexagonal cylindrical shape in the illustrated example). The outer periphery of the connecting portion 14a is fitted into a hole (not shown) formed in the center of the spool 4 and having the same polygonal section (that is, the hexagonal section) so that the pinion member 14 rotates together with the spool 4. On the other hand, the torque transmitting portion 9a of the torsion bar 9 is fitted into the inner periphery of the connecting portion 14a of the pinion member 14 so that the torque transmitting portion 9a rotates together with the pinion member 14.

The pinion member 14 has a pinion 14b formed on an end at the side opposite to the connecting portion 14a. The pinion 14b is provided at its center with an axial hole 14c which is formed to have a polygonal section (a hexagonal section in the illustrated example) and into which a first connecting portion 15a (formed in the same polygonal section as the axial hole 14c) of a connector 15 is fitted so that the connector 15 rotates together with the pinion member 14. The connector 15 also has a third connecting portion 15c formed on an end at the side opposite to the first connecting portion 15a.

The connector 15 is fitted on an extension shaft 9b of the torsion bar 9 and a snap ring 16 is put to fall in a ring groove 9c of the extending shaft portion 9b, thereby stopping the axial movement of the connector 15 (that is, preventing the connector 15 from coming off). In this state, the pinion member 14 is prevented from coming off the connector 15 because of the step between the first and second connecting portions 15a and 15b of the connector 15.

A ring-like connector-side bush 17 has an inner periphery 17a which is formed to have a polygonal section which is the same as the section of the second connecting portion 15b of the connector 15. The inner periphery 17a of the connector-side bush 17 is fitted on the second connecting portion 15b so that the connector-side bush 17 is attached to the connector 15 not allowing the relative rotation therebetween. On the other hand, the retainer 10 has a hole 10b in which a ring-like retainer-side bearing 18 is fitted such that the retainer-side bearing 18 is not allowed to rotate relative to the retainer 10. The connector-side bush 17 is supported by the retainer-side bearing 18 in such a manner as to allow the relative rotation therebetween, whereby the connector 15 is rotatably supported by the retainer 10.

The speed reduction mechanism 7 comprises a carrier 19 composed of a ring-like disk, a predetermined number of (one in the illustrated example) planetary gear 20 which is supported to the carrier 19 such that the planetary gear 20 can move radially relative to the carrier 19 (details will be described later), an annular ring member 21, and a sun gear member 22.

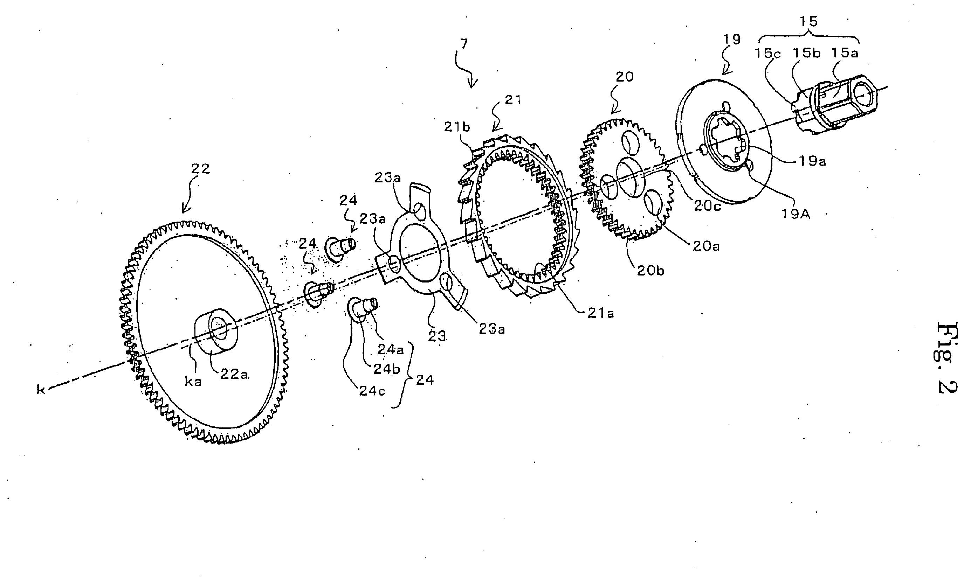

Fig. 2 is an enlarged exploded perspective view of the speed reduction mechanism 7 as seen in a direction of arrow A in Fig. 1.

In Fig. 2 and Fig. 1, the carrier 19 has an inner periphery 19a which is formed to have a polygonal section capable of engaging with (e.g. the same polygonal section as) the third connecting portion 15c of the connector 15. The inner periphery 19a of the carrier 19 is fitted on the third connecting portion 15c, whereby the carrier 19 is attached to the connector 15 not allowing the relative rotation therebetween (that is, the carrier 19 rotates together with the connector 15).

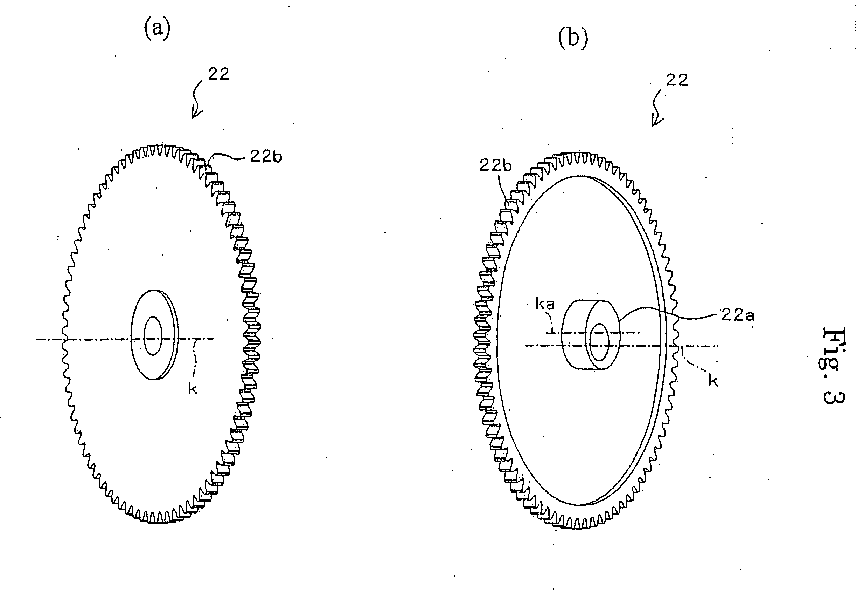

Fig. 3(a) is a perspective view of the sun gear member 22 as seen from the side opposite to the planetary gear 20 side (from the other axial side or in a direction of arrow B in Fig. 1) and Fig. 3(b) is a perspective view of the sun gear member 22 as seen from the planetary gear 20 side (from one axial side or in a direction of arrow C in Fig. 1).

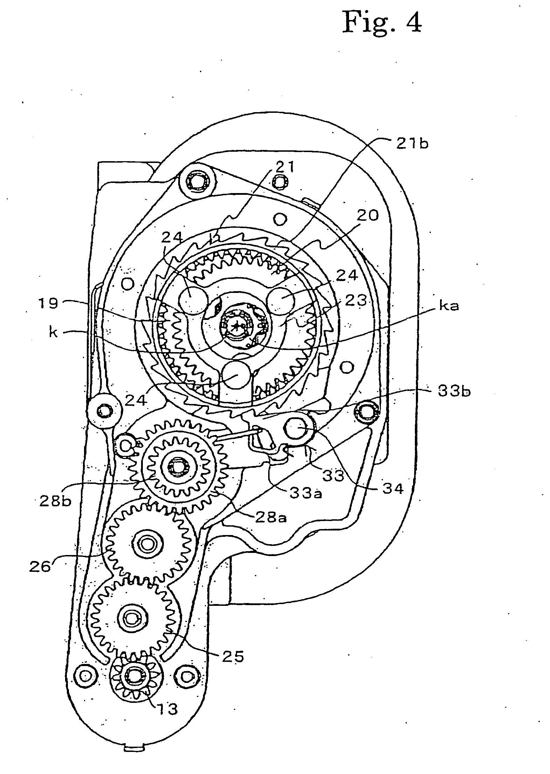

In Figs. 3(a), 3(b), and Fig. 2, the sun gear member 22 is provided with large-diameter external teeth 22b located on the aforementioned other axial side and a small-diameter cylindrical convex portion 22a located on the aforementioned one axial side, which are integrally provided (may be integrally formed or separately formed and fixed to each other) so that the cylindrical convex portion 22a and the external teeth 22b rotate together. While the sun gear member 22, the ring member 21, and the carrier 19 have common and substantially concentric axial lines "k", respectively, the cylindrical convex portion 22a of the sun gear member and a concave portion 20c (described later) of the planetary gear 20 have common and substantially concentric axial lines "ka", respectively. The axial line "ka" is eccentric from the aforementioned axial line "k" as shown in Fig. 2 and Fig. 3(b) (see also Fig. 4 as will be described later).

The ring member 21 is located at the one axial side (the planetary gear 20 side) of the sun gear member 22 and is provided on its inner periphery with internal teeth 21a and on its outer periphery with ratchet teeth 21b. The internal teeth 21a and the ratchet teeth 21b are structured to rotate together. The ratchet teeth are formed such that the direction of slopes of saw-tooth projections is the counterclockwise direction as seen in Fig. 2 or the clockwise direction as seen in Fig 1.

The planetary gear 20 is mounted to the other axial side (the sun gear 22 side) of the carrier 19 by a predetermined number of (three in the illustrative example) speed-reduction pins 24 via a speed reduction plate 23. Each speed reduction pin 24 comprises a small-diameter tip portion 24a which is screwed (or press-fitted) into and thus fixed to one of three through holes 19A formed at corresponding positions of the carrier 19, a large-diameter portion 24b which is continuously formed with the small-diameter tip portion 24a and is inserted into one of three through holes 23a formed at corresponding positions of the speed-reduction plate 23, and a head 24c having a diameter larger than that of the large-diameter portion 24b. In this state, the speed-reduction pins 24, the speed-reduction plate 23, and the carrier 19 are strongly fixed to each other by the fixing of the tip portions 24a of the speed reduction pins to the through holes 19A of the carrier and the fitting of the large portions 24b of the speed reduction pins to the through holes 23a of the speed-reduction plate. The planetary gear 20 is provided with three through holes 20a at positions corresponding to the speed-reduction pins 24. The diameter of the through holes 20a is larger than the outer diameter of the large-diameter portions 24b of the speed-reduction pins 24 by a predetermined size so that the speed-reduction pins 24 are loosely fitted into the through holes 20a. In this state, the planetary gear 20 is also provided on its outer periphery with external teeth 20b which can be in mesh with the internal teeth 21a of the ring member 21 and on its inner side (radially center side) with the concave portion (through hole in this example) 20c which has substantially the same diameter as the cylindrical convex portion 22a of the sun gear member and can be slidably fitted to the cylindrical convex portion 22a.

As a result, the planetary gear 20 is supported by the carrier 19 such that the planetary gear 20 can move radially. According to the rotation of the sun gear member 22, the concave portion 20c slides on the cylindrical convex portion 22a of the sun gear member and the external teeth 20b are in mesh with the internal teeth 21a of the ring member 21, while the planetary gear 20 eccentrically rotates along the inner periphery of the ring member 21 (in detail, the position of the axial line "ka" moves around the axial line "k" of the ring member 21 and the like according to the rotation of the sun gear member 22), thereby constructing a hypocycloid mechanism. The carrier 19 movably supports the planetary gear 20 and rotates about the axial line "k" substantially concentric to those of the sun gear member 22 and the ring member 21 according to the movement of the planetary gear 20.

According to the arrangement as mentioned above, the speed-reduction mechanism 7 is structured as a hypocycloid gear mechanism of which the input is the sun gear 22 and the output is the carrier 19.

Returning to Fig. 1, the power transmission mechanism 8 comprises, besides the aforementioned speed-reduction mechanism 7, a pair of idle gears 25, 26, a clutch spring 27, a connecting gear 28, a limiter screw 31, an initial spring 32, a clutch pawl 33, and a clutch pawl pin 34. Fig. 4 is a view on arrow D in Fig. 1 illustrating these components (in a state that a retainer cover 35 as will be described later is removed).

In Fig. 4 and Fig. 1, the pair of idle gears 25, 26 are rotatably mounted on the retainer 10 in such a manner that they are in mesh with each other. One idle gear 25 is in mesh with the motor gear 13 and the other idle gear 26 is in mesh with a large-diameter gear portion 28a of the connecting gear 28.

The connecting gear 28 is rotatably mounted on the retainer 10. A small-diameter gear portion 28b of the connecting gear 28 is in mesh with the external teeth 22b of the sun gear member 22. The clutch spring 27 has a curved portion 27a which is partially wound around the outer periphery of the small-diameter gear portion 28b of the connecting gear 28. The other end portion 27b of the clutch spring 27 is engaged with an engaging window 33a of the clutch pawl 33.

The clutch pawl 33 is pivotally attached to the retainer 10 by the clutch pawl pin 34 such that an engaging tooth 33b of the tip of the clutch pawl 33 can engage with one of the ratchet teeth 21b of the ring member 21 rotating in a rotational direction corresponding to the belt winding direction of the spool 4. The clutch pawl 33 is always biased in such a direction as to depart from the ratchet teeth 21b by the initial spring 32.

In Fig. 1, in the state that the respective components of the power transmission gear train 8 are assembled in a concave portion formed in a face of the retainer 10 opposite to the face which is attached to the frame 2, a retainer cover 35 is put on the face on which the respective components are assembled and a T/RD cassette 36 is further put on the retainer cover 35. In this state, the retainer 10, the retainer cover 35, and the T/RD cassette 36 are tightened together and fixed to the side wall 2b of the frame 2 by the aforementioned three screws 11.

Hereinafter, the action of the seat belt retractor 1 of this embodiment having the aforementioned structure will be described.

### (1) Until the buckle switch becomes ON state

In the state that the seat belt is not in use, the seat belt is completely wound up onto the spool 4 by the driving torque of the return spring (not shown) in the T/RD cassette 36 and is thus accommodated in the seat belt retractor 1. In this state, the motor 6 is stopped and the clutch pawl 33 is spaced apart from the ratchet teeth 21b of the ring member 21 because of the spring force of the initial spring 32 so that the ring member 21 is freely rotatable.

As the seat belt is withdrawn from the seat belt retractor 1 for the use of the seat belt by an occupant, the spool 4 rotates in the belt withdrawing direction. During this, since the ring member 21 is freely rotatable, the rotation of the spool 4 is not transmitted to the motor 6 side so that the spool 4 can easily rotate. Therefore, the seat belt is smoothly withdrawn.

After the seat belt is withdrawn, a tongue (not shown) is inserted into and latched to a buckle (not shown), whereby the buckle switch (not shown) is turn ON to allow the driving of the motor 6. The detailed description of the buckle switch and the ON switch operation of the motor 6 will be omitted because well known technologies can be used adequately.

### (2) During the drive in the winding direction

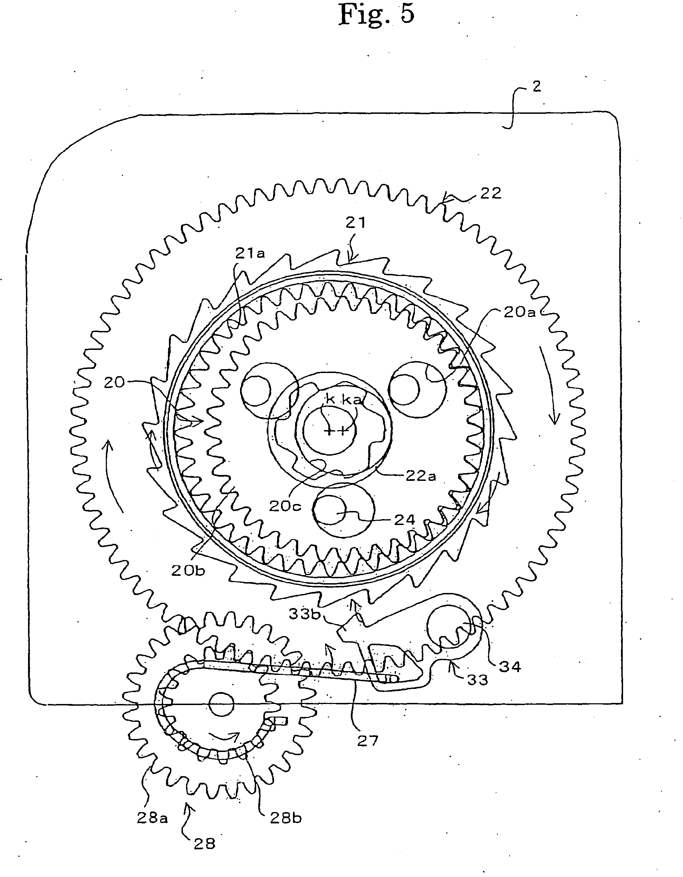

In the event of emergency situation such as a vehicle collision, the motor 6 is driven in the rotational direction corresponding to the belt winding direction of the spool 4. The rotational force of the motor 6 is transmitted to the sun gear 22 of the speed-reduction mechanism 7 through the motor gear 13, the pair of idle gears 25, 26, and the connecting gear 28 so that the sun gear 22 rotates in the corresponding direction (the clockwise direction in Fig. 5). During this, since the axial line "ka" of the cylindrical convex portion 22a of the sun gear member is eccentric from the axial line "k" of the sun gear member 22, the cylindrical convex portion 22a revolves around the axial line "k" of the sun gear 22 according to the rotation of the sun gear 22. The concave portion 20c of the planetary gear is fitted to and slides on the cylindrical convex portion 22a and the external teeth 20b of the planetary gear 20 are in mesh with the internal teeth 21a of the ring member 21. Since the ring member 21 is free and the planetary gear 20 orbitally revolves in the clockwise direction in Fig. 5, the ring member 21 rotates in the clockwise direction in Fig. 5 and the planetary gear 20 does not rotate about its own axis (only orbitally revolve) at this point.

Since, at this point, the connecting gear 28 rotates in the counterclockwise direction in Fig. 5, the clutch spring 27 rotates about the connecting gear 28 in the counterclockwise direction in Fig. 5. Then, the tip of the clutch spring 27 moves the clutch pawl 33 to pivot about the clutch pawl pin 34 in the clockwise direction in Fig. 5 so as to lift the engaging tooth 33b to such a position that the engaging tooth 33b can engage one of the ratchet teeth 21b. Since the ring member 21 rotates in the clockwise direction in Fig. 5, one of the ratchet teeth 21b engages with the engaging tooth 33b so that the clutch composed of the ratchet teeth 21b and the engaging tooth 33b is turned ON, thereby preventing the rotation of the ring member 21.

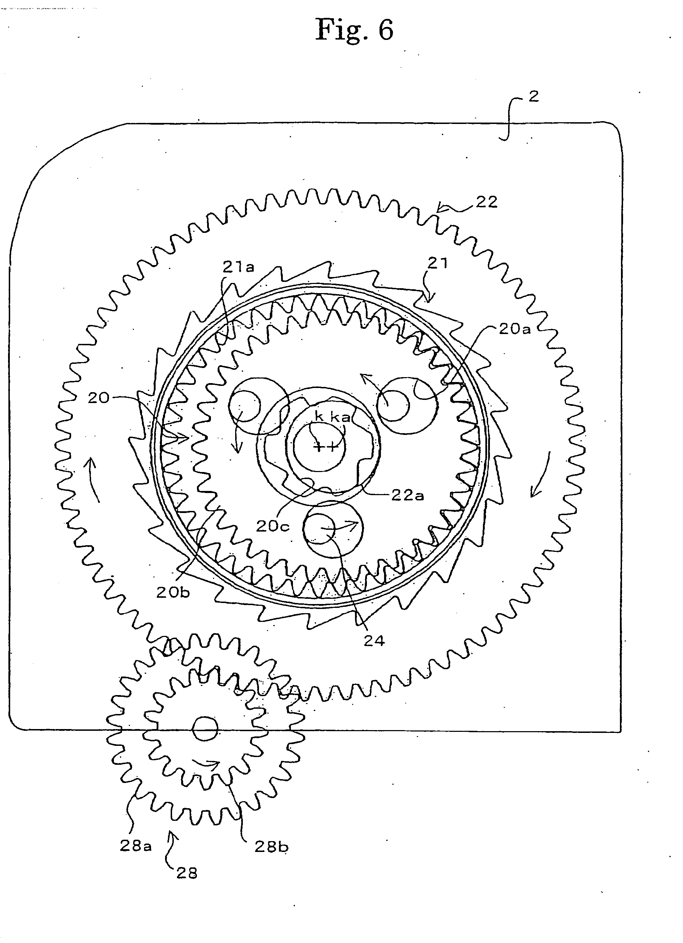

As the ring member 21 is stopped, the planetary gear 20 orbitally revolves in the clockwise direction while the planetary gear 20 rotate about its own axis in the counterclockwise direction, i.e. rotates eccentrically as shown in Fig. 6. Since the planetary gear 20 is supported by the carrier 19 (not shown in Fig. 5 nor Fig. 6) via the speed-reduction pins 24, the eccentric rotation of the planet gear 20 finally outputs as the rotational movement of the carrier 19 about the axial line "k" in the counterclockwise direction in Fig. 6.

In this manner, the rotation of the sun gear member 22 in the clockwise direction in Fig. 6 is outputted as the rotation of the carrier 19 in the counterclockwise direction in Fig. 6 via the speed-reduction pins 24 after the speed of the rotation is reduced by the speed reduction mechanism 7 as the hypocycloid gear mechanism. Further, the rotation of the carrier 19 is transmitted to the spool 4 through the connector 15 and the pinion 14, whereby the spool 4 rotates in the belt winding direction. Therefore, the seat belt is wound up.

### (3) During the drive in the withdrawing direction

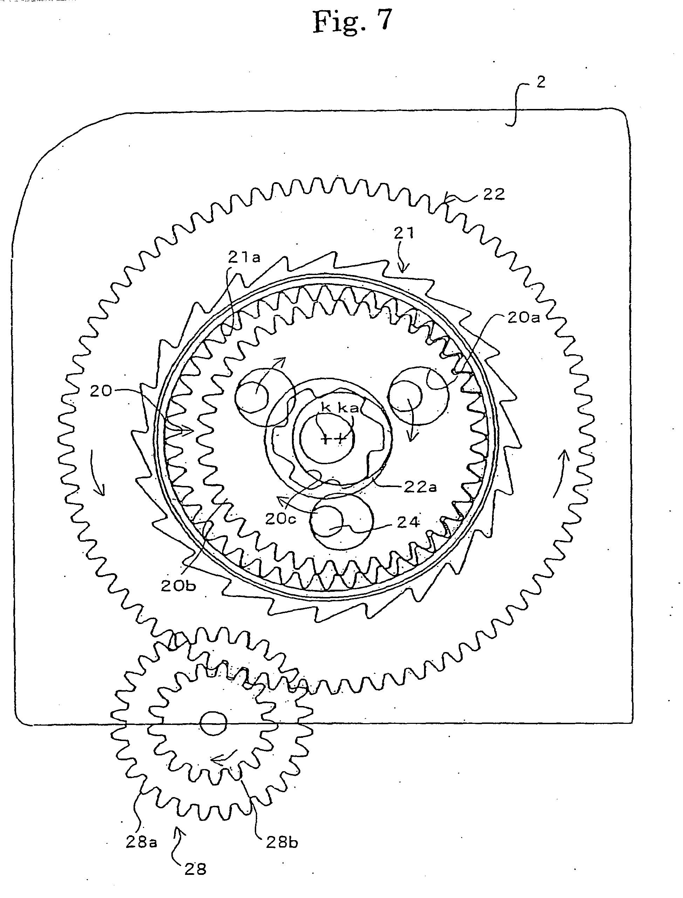

On the other hand, to loosen the seat belt, the motor 6 is driven in a direction corresponding to the belt withdrawing direction of the spool 4. The rotation of the motor 6 is transmitted to the sun gear member 22 through the motor gear 13, the pair of idle gears 25, 26, and the connecting gear 28 so that the sun gear 22 rotates in a corresponding direction (the counterclockwise direction in Fig. 7). Since the ring member 21 does not rotate at this point as mentioned above, the rotation of the sun gear member 22 is transmitted to the planetary gear 20 in the aforementioned manner. As a result, the planetary gear 20 rotates about its own axis in the clockwise direction in Fig. 7. During this, the carrier 19 is biased in the belt withdrawing direction due to the belt tension exerted on the seat belt so that the carrier 19 rotates via the speed-reduction pins 24 in the clockwise direction in Fig. 7 corresponding to the belt withdrawing direction according to the rotation of the planetary gear 20 about its own axis in the clockwise direction in Fig. 7. However, since the biasing force on the carrier 19 in the belt withdrawing direction due to the aforementioned belt tension is reduced according to the rotation of the carrier 19 in the belt withdrawing direction, the rotation of the carrier 19 is stopped soon.

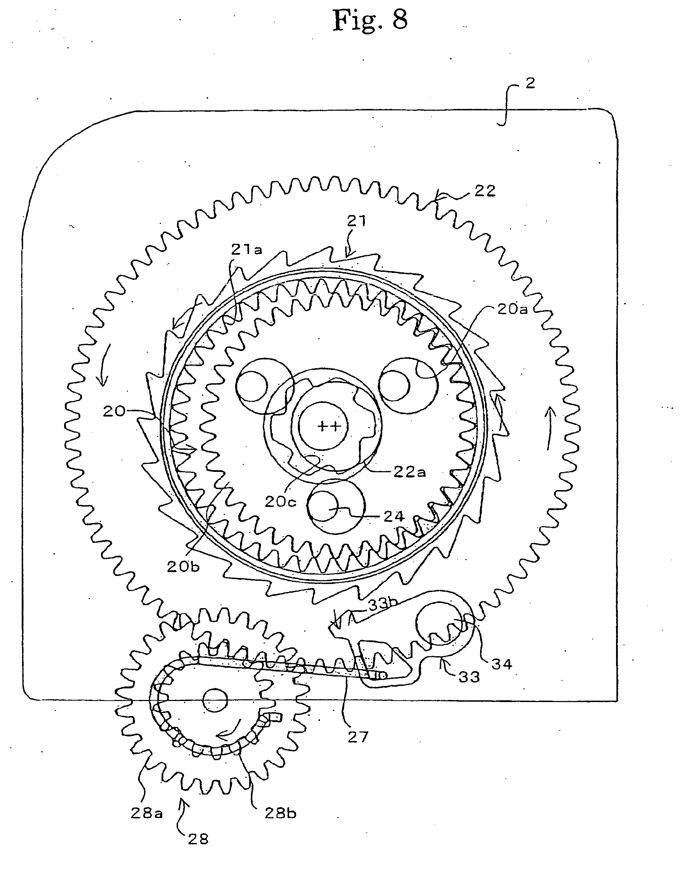

Then, the planetary gear 20 starts to orbitally revolve in the counterclockwise direction. By the orbital revolution of the planetary gear 20, the ring member 21 starts to rotate in the counterclockwise direction through the internal teeth 21a as shown in Fig. 8. The rotation of the ring member 21 reduces the engaging force between the one of the ratchet teeth 21b of the ring member 21 and the engaging tooth 33b of the clutch pawl 33. In this state, by the rotation of the connecting gear 28 in the clockwise direction in Fig. 8, the clutch spring 27 wound around the connecting gear 28 pivots about the connecting gear 28 in the clockwise direction in Fig. 8. Accordingly, the tip of the clutch spring 27 moves the clutch pawl 33 to pivot about the clutch pawl pin 34 in the counterclockwise direction in Fig. 8 so as to move the engaging tooth 33b downwardly to the non-engaging position i.e. the initial position where the engaging tooth 33b is out of mesh with the ratchet teeth 21b of the ring member 21. Therefore, the engagement between the engaging tooth 33b and the one of the ratchet teeth 21b is cancelled. That is, the clutch composed of the engaging tooth 33b and the ratchet teeth 21b is turned OFF so that the ring member 21 is returned to the initial state, i.e. to be freely rotatable.

The retractor 1 of this embodiment having the aforementioned structure and the operation exhibits the following works and effects.

### (A) Miniaturization of retractor

In the retractor of this embodiment, a series of rotation-transfer systems in the speed-reduction mechanism 7, the ring member (internal gear) 21 having the internal teeth 21a and the planetary gear (spur gear) 20 having the external teeth 20b cooperate together to compose a hypocycloid mechanism as mentioned above and the speed ratio (reduction ratio) is represented by (Z1-Z2)/Z2 wherein the number of teeth of the internal teeth 21a of the ring member is Z1 and the number of teeth of the external teeth 20b of the planetary gear is Z2. Therefore, by setting the difference between the numbers of teeth Z2 and Z1 to be relatively small (four in the example shown in Fig. 5 through Fig. 8), the reduction ratio of the rotation to be finally transmitted to the carrier 19 via the cylindrical convex portion 22a and the planetary gear 20 from the sun gear member 22 can be set to be large when the ring member 21 is locked by the clutch pawl 33 as mentioned above (2). In this manner, by utilizing the characteristics of the hypocycloid mechanism, large reduction ratio to obtain torque enough for winding up the seat belt can be easily obtained. Further, the necessity to construct multiple stages of combinations of spur gears can be avoided, thus preventing the increase in size of the retractor 1.

### (B) Large load transmission

Since the transmission of driving torque is achieved by mesh between the internal teeth (internal gear) 21a and the external teeth 20b in the retractor 1 of this embodiment, the number of teeth contributing to the torque transmitting portion in the mesh between the ring member 21 and the planetary gear 20 is larger than that in case of normal engagement between spur gears (see Fig. 5 through Fig. 8).Because the large load transmission can be thereby easily achieved, gears which are made of lighter materials, smaller, or thinner than those in case of engagement between spur gears may be used under the same load conditions.

### (C) Power saving

Generally in a retractor using a motor, the motor is energized in the event of emergency and is driven in the belt winding direction of a take-up member and the driving torque is transmitted to the take-up member via a power transmission mechanism so as to conduct the winding of the seat belt. After a predetermined period of time, the motor is de-energized in order to prevent large power consumption. After that, as a result, the wound seat belt is slightly withdrawn due to deceleration of a vehicle, an occupant, and/or spring properties of a seat. During this, an emergency locking mechanism separately provided to the retractor operates to lock the rotation of the take-up member in the belt withdrawing direction. After passing the emergency situation, it is necessary to drive the motor in the belt winding direction in order to cancel the lock operating state to return the initial state.

On the other hand, the retractor 1 of this embodiment is provided with the hypocycloid gear mechanism as mentioned above. Therefore, the driving torque generated by the motor 6 is inputted from the sun gear member 22 side and is transmitted taking a transmitting route of the sun gear member 22 → the eccentric cylindrical convex portion 22a → the concave portion 20c of the planetary gear which slides on and is fitted to the eccentric cylindrical convex portion 22a → the carrier 19. Accordingly, when any load is inputted from the carrier 19 side, for example, during de-energization of the motor, the torque never rotates the sun gear member 22 even if the torque is transmitted taking a route of the carrier 19 → the concave portion 20c of the planetary gear → the cylindrical convex portion 22a (so-called self-locking mechanism of the hypocycloid gear mechanism). According to this mechanism, in the retractor 1 of this embodiment, unlike the aforementioned conventional structure, the wound seat belt is not withdrawn so that the seat belt tension obtained by the driving of the motor in the event of emergency can be maintained even after the energization of motor is stopped. In the retractor 1 of this embodiment, the necessity of actuation of a locking means 5 as an emergency locking mechanism is eliminated and the necessity of driving of the motor 6 to cancel the lock operating state to return to the initial state is also eliminated, thereby preventing unnecessary power consumption. In addition, the discomfort which the occupant may feel when tightened by the winding of the seat belt can be also avoided.

## Claims

1. A seat belt retractor (1) comprising:
a take-up member (4) for winding up a seat belt,
a motor (6) for generating driving torque to rotate the take-up member (4), and
a power transmission mechanism (8) for transmitting said driving torque of the motor (6) to said take-up member (4), wherein the power transmission mechanism (8) is provided with a hypocycloid gear mechanism which reduces the rotational speed of said motor while transmitting the rotation of the motor to said take-up member,
**characterized in that**
said hypocycloid gear mechanism comprises: a sun gear (22) which is arranged at the input side of said rotation of said motor, a cylindrical convex portion (22a) which is arranged at one side in the axial direction of said sun gear (22) such that the axial line of the cylindrical convex portion (22a) is eccentric from the axial line of said sun gear (22), a ring member (21) which is arranged at said one side in the axial direction of said sun gear (22) and is provided on its inner periphery with internal teeth (21a),
a planetary gear (20) which is provided on its outer periphery with external teeth (20b) to be in mesh with said internal teeth (21a) of said ring member (21) and on its inner periphery with a concave portion (20c) to be fitted to said cylindrical convex portion (22a), wherein said concave portion (20c) slides on said cylindrical convex portion according to the rotation of said sun gear (22) and said external teeth are in mesh with said internal teeth of said ring member (21) so that the planetary gear eccentrically rotates at the inner side of said ring member, and
a carrier (19) which is arranged on said one side in the axial direction of the planetary gear, supports said planetary gear allowing the movement of said planetary gear radially, and rotates together with said planetary gear. said carrier (19) being the output of said hypocycloid gear mechanism.

2. A seat belt retractor according to claim 1, wherein the take-up member (4) is rotatable.

3. A seat belt retractor as claimed in claim 1 or 2, wherein the axial line of said ring member (21) and the axial line of said carrier (19) are substantially concentric to the axial line of said sun gear (22) while the axial line of the concave portion (20c) of said planetary gear (20) is substantially concentric to the axial line of said planetary gear.

4. A seat belt retractor as claimed in claim 1, 2, or 3, wherein said planetary gear (20) is arranged at the inner side of said ring member (21) such that the axial line of the planetary gear revolves around the axial line of said ring member according to the rotation of said sun gear (22).

## Patentansprüche

1. Sitzgurtaufroller (1) mit:
einem Aufnahmeteil (4) zum Aufrollen eines Sitzgurts,
einem Motor (6) zum Erzeugen von Antriebsdrehmoment, um das Aufnahmeteil (4) zu drehen, und
einem Kraftübertragungsmechanismus (8) zum Übertragen des Antriebsdrehmoments des Motors (6) zum Aufnahmeteil (4), wobei der Kraftübertragungsmechanismus (8) mit einem Hypozykloidradmechanismus versehen ist, der die Drehzahl des Motors reduziert, während er die Drehung des Motors zum Aufnahmeteil überträgt,
**dadurch gekennzeichnet, daß**
der Hypozykloidradmechanismus aufweist:
ein Sonnenrad (22), das an der Eingangsseite der Drehung des Motors angeordnet ist,
einen zylindrischen konvexen Abschnitt (22a), der an einer Axialrichtungsseite des Sonnenrads (22) so angeordnet ist, daß die Axiallinie des zylindrischen konvexen Abschnitts (22a) gegenüber der Axiallinie des Sonnenrads (22) außermittig ist,
ein Ringteil (21), das an der einen Axialrichtungsseite des Sonnenrads (22) angeordnet und auf seinem Innenumfang mit Innenzähnen (21a) versehen ist,
ein Planetenrad (20), das auf seinem Außenumfang mit Außenzähnen (20b) zum Eingriff mit den Innenzähnen (21a) des Ringteils (21), und auf seinem Innenumfang mit einem konkaven Abschnitt (20c) versehen ist, der auf den zylindrischen konvexen Abschnitt (22a) passbar ist, wobei der konkave Abschnitt (20c) auf dem zylindrischen konvexen Abschnitt gemäß der Drehung des Sonnenrads (22) gleitet und die Außenzähne mit den Innenzähnen des Ringteils (21) im Eingriff stehen, so daß das Planetenrad an der Innenseite des Ringteils außermittig dreht, und
einen Träger (19), der auf der einen Axialrichtungsseite des Planetenrads angeordnet ist, das Planetenrad lagert, um die Radialbewegung des Planetenrads zu ermöglichen, und zusammen mit dem Planetenrad dreht, wobei der Träger (19) der Ausgang des Hypozykloidradmechanismus ist.

2. Sitzgurtaufroller nach Anspruch 1, wobei das Aufnahmeteil (4) drehbar ist.

3. Sitzgurtaufroller nach Anspruch 1 oder 2, wobei die Axiallinie des Ringteils (21) und die Axiallinie des Trägers (19) im wesentlichen konzentrisch zur Axiallinie des Sonnenrads (22) sind und die Axiallinie des konkaven Abschnitts (20c) des Planetenrads (20) im wesentlichen konzentrisch zur Axiallinie des Planetenrads ist.

4. Sitzgurtaufroller nach Anspruch 1, 2 oder 3, wobei das Planetenrad (20) an der Innenseite des Ringteils (21) so angeordnet ist, daß die Axiallinie des Planetenrads um die Axiallinie des Ringteils gemäß der Drehung des Sonnenrads (22) umläuft.

## Revendications

1. Rétracteur de ceinture de sécurité (1), comportant :
• un élément d'enroulement (4) pour enrouler une ceinture de sécurité,
• un moteur (6) pour générer un couple d'entraînement pour faire tourner l'élément d'enroulement (4), et
• un mécanisme de transmission de puissance (8) pour transmettre ledit couple d'entraînement du moteur (6) audit élément d'enroulement (4), dans lequel le mécanisme de transmission de puissance (8) est muni d'un mécanisme à engrenage hypocycloïde qui réduit la vitesse de rotation dudit moteur tout en transmettant la rotation du moteur audit élément d'enroulement,
**caractérisé en ce que** ledit mécanisme à engrenage hypocycloïde comporte :
• un pignon planétaire (22) qui est agencé au niveau du côté d'entrée de ladite rotation dudit moteur,
• une partie convexe cylindrique (22a) qui est agencée au niveau d'un côté dans la direction axiale dudit pignon planétaire (22) de telle sorte que la ligne axiale de la partie convexe cylindrique (22a) est excentrée par rapport à la ligne axiale dudit pignon planétaire (22),
• un élément annulaire (21) qui est agencé au niveau dudit un côté dans la direction axiale dudit pignon planétaire (22), et qui est muni sur sa périphérie intérieure de dents interne (21a),
• un engrenage épicycloïdal (20) qui est muni sur sa périphérie extérieure de dents externes (20b) devant être en engrènement avec lesdites dents internes (21a) dudit élément annulaire (21), et sur sa périphérie intérieure d'une partie concave (20c) devant être agencée sur ladite partie convexe cylindrique (22a), ladite partie concave (20c) coulissant sur ladite partie convexe cylindrique selon la rotation dudit pignon planétaire (22), et lesdites dents externes étant en engrènement avec lesdites dents internes dudit élément annulaire (21) de sorte que l'engrenage épicycloïdal tourne de manière excentrée au niveau du côté intérieur dudit élément annulaire, et
• un support (19) qui est agencé sur ledit un côté dans la direction axiale du pignon planétaire, qui supporte ledit pignon planétaire en permettant le déplacement dudit engrenage épicycloïdal radialement, et qui tourne ensemble avec ledit engrenage épicycloïdal, ledit support (19) étant la sortie dudit mécanisme à engrenage hypocycloïde.

2. Rétracteur de ceinture de sécurité selon la revendication 1, dans lequel l'élément d'enroulement (4) est rotatif.

3. Rétracteur de ceinture de sécurité selon la revendication 1 ou 2, dans lequel la ligne axiale dudit élément annulaire (21) et la ligne axiale dudit support (19) sont sensiblement concentriques par rapport à la ligne axiale dudit pignon planétaire (22), tandis que la ligne axiale de la partie concave (20c) dudit engrenage épicycloïdal (20) est sensiblement concentrique par rapport à la ligne axiale dudit engrenage épicycloïdal.

4. Rétracteur de ceinture de sécurité selon la revendication 1, 2 ou 3, dans lequel ledit
engrenage épicycloïdal (20) est agencé au niveau du côté intérieur dudit élément annulaire (21) de telle sorte que la ligne axiale de l'engrenage épicycloïdal tourne autour de la ligne axiale dudit élément annulaire selon la rotation dudit pignon planétaire (22).
